# EUROPEAN PATENT APPLICATION

(11) **EP 2 664 980 A2**
(43) Date of publication of application: **20.11.2013**
(21) Application number: 13165138.2
(22) Date of filing: 24.04.2013
(51) Int. Cl.: G06F 3/023, G06F 1/16

(54) **Keyboard of an electronic device and actuation procedure of the keyboard**

(30) Priority: 18.05.2012 ES 201230751
(71) Applicant: Fermax Branding, S.l.u., 46017 Valencia (ES)
(72) Inventor: Ferrer Zaera, Carlos, 46017 Valencia (ES)
(74) Representative: Ungria López, Javier

(57) **Abstract**

Comprises a screen (2), at least one first key (3) associated with an additional configurable functionality represented on the screen (2) and second keys (4) associated with a main function. It is characterized in that the at least first key (3) is hidden under a translucent area (5) of the frontal plate (6) of the device (1). On the key (3) and under the frontal plate (6) it comprises an illuminating (8) and enabling element of the at least first key to illuminate and make the first key (3) visible by the actuation of the second key (4), situation in which, when pressing the first key (3) by touching the translucent area (5), the additional function associated with the first key (3) is actuated. It provides enhanced aesthetics and allows extending the functions of the device by means of the incorporation of different first keys (3).

## Description

### Object of the invention

The invention relates to the keyboard of an electronic device, whose object is to reduce the number of keys visible by the user by keeping hidden a series of keys, which have been allocated functionalities that extend the benefits of the device and are only made visible when the access to said functionalities is required.

In addition, the invention relates to an actuation method of the keyboard of an electronic device wherein keys are kept hidden while the device is idle and are made visible when the user so requires it by actuating one of the visible keys.

The invention is applicable to any electronic device incorporating a keyboard and an operating menu display screen, such as, for example, any console or operations box. In particular, the invention is applicable to video intercom systems.

### Background of the invention

Video intercom systems, home access consoles, home monitors, etc. currently have interactive menu screens that require the use of keys or switches external to the screen for the reception of the different functions.

The use of the these keys or sensors may clutter the design or aesthetics of the electronic device, due to which the trend is to attempt to hide them in order to provide enhanced aesthetics to make the device in question more attractive.

Spanish utility model under application number U200601621, which may be cited in this regard, describes a touch button panel that remains hidden when it enters into contact with the casing of the device, in such a way that the location of each key of the button panel is serigraphed on the casing. The functionality of each one of the keys of the button panel is activated when the serigraphed area of the casing under which the key is located is pressed.

This button panel presents the advantage that the keyboard of the device is located on a smooth surface that provides enhanced aesthetics to the user, but presents the inconvenience that it does not reduce the number of keys visible by the user when the device is idle.

European invention patent under application number 06846405, which can also be cited in this regard, describes a procedure and a device to unlock the idle state of said device. This invention is applied to devices provided with a touchscreen, so the unlocking is carried out by making a movement along a predefined trajectory on the touchscreen, such as, for example, a horizontal movement on said touchscreen. In this case, in addition to using touchscreen keys, these devices incorporate a keyboard external to the screen. The incorporation of hidden keys that the user can make visible when the access to the secondary functionalities is required is not envisaged.

### Description of the invention

In order to solve the inconveniences and obtain the aforementioned objectives, the invention provides a new keyboard of an electronic device, wherein said electronic device comprises the corresponding display screen of configurable functions, said functions being configurable by means of interactive menus, so it is also provided with at least one first key associated with a configurable functionality represented on the screen in order to carry out the functionality associated with said at least first key when actuating said at least first key, which is shown on the screen. In this type of configuration, the at least first key is located on the periphery of the screen, so the functionality associated thereof is shown on said screen and in proximity to said at least first key. In addition, the electronic device to which the invention is applied comprises second keys that are associated with a fixed function, so when one of said second keys is actuated, the functionality with which it is associated is carried out.

The main novelty of the invention resides in the fact that it is **characterized in that** the at least first key is hidden within the device, under a translucent area of the frontal plate of its casing. In addition, under the frontal plate and in correspondence with the at least first key, it comprises an illuminating element under the translucent area. One of the second keys constitutes an actuating means of the illuminating and enabling element of the at least first key in order to illuminate and make visible said at least first key and to show the function associated with said at least first key on the screen by actuating said second key. When the first key is illuminated, and therefore visible, the function associated with the first key is carried out by touching the illuminated area of the frontal plate. This configuration keeps the at least first key hidden when the functionality allocated thereof is not required by the user, which allows using the device by actuating the rest of the second keys to carry out the functionalities allocated thereof. The functionality allocated to the at least first key is only shown on the screen, and therefore only carried out, when the second key constituting the actuating means of the illuminating and enabling element of the at least first key is actuated. This configuration provides the device with enhanced aesthetics and operative simplicity since not all of the keys of the keyboard are shown when access to the functionality allocated thereof is not required.

The functionality associated with said at least first key is a secondary function, and the function associated with the second keys is a main function, so the secondary functions are kept hidden while the user does not need them.

In a preferred embodiment of the invention, the frontal plate comprises a recess in its hidden rear face that defines the translucent area, said recess being of a closed or semi-closed configuration, preferably of a circular configuration. The illuminating element is preferably a light-emitting diode.

In addition, in the preferred embodiment of the invention, the at least first key is a capacitive-type key, so when the translucent area is illuminated, touching said illuminated translucent area carries out the function allocated to said first key. The illumination element is mounted on the key itself to illuminate the translucent area. The preferred embodiment also envisages the second keys being capacitive-type keys to facilitate their actuation.

The preferred embodiment of the invention envisages the incorporation of a plurality of first keys, so each one of them is located in correspondence with a translucent area of the frontal plate and with an illuminating element located on each one of the first keys. In this configuration, one of the second keys also constitutes the actuating means of the illuminating and enabling elements of the first keys, so when said second key is actuated, said first keys are made visible and the functionalities allocated thereof are enabled, while each function associated with each first key is shown on the screen in order to carry out the function allocated thereof when one of the first keys is actuated.

The incorporation of means to show an additional function menu on the screen and to allocate navigation functions to said first keys along said additional function menu is envisaged by detecting a touch, maintained for a pre-established period of time, of the second key constituting the actuating means of the illuminating elements of the first keys and of the enabling elements of said first keys.

In addition, the invention relates to an actuation procedure of the keyboard of the aforementioned electronic device, which is **characterized in that** it comprises maintaining the at least first key or keys hidden under the frontal plate of the casing when the device is idle, a situation in which when the second key is actuated, which constitutes the actuating means of the illuminating and enabling element of said at least first key or keys, the illumination of said at least first key or keys is carried out in such a way that they are made visible and the image of the function associated thereof is shown on the screen. In this situation, when a first key is actuated, the function associated thereof is carried out. This function varies depending on the context, that is to say, one function or another is shown depending on the state of the screen: idle, in conversation, with an image, etc.

In addition, the procedure of the invention comprises maintaining the second key, which constitutes the actuating means of the illuminating and enabling element of the first keys, pressed during a pre-established period of time, to allocate navigation functions, shown by means of images on the screen, to the first keys and to show an additional function menu on the screen. In this situation, by actuating said illuminated first keys, said additional function menu may be navigated according to the navigation functionality associated with each one of the first keys.

A keyboard is obtained by means of the described configuration, wherein only the second keys are visible, each one of which is associated with a main function to which the user has direct access to carry out each one of them by means of pressing the corresponding second key. In addition, the function of one of the second keys is the activation and display of first keys with which configured secondary functionalities are associated, represented on the screen. Therefore, the first keys are not visible when the use of said secondary functionalities is not required by the users, for which the second key must be actuated to allow carrying out the activation and display of the first keys, situation wherein the carrying out of the secondary functionality associated with each said first keys is enabled, allowing the access to the secondary functionalities in a semi-direct manner.

Next, in order to facilitate a better comprehension of this specification and forming an integral part thereof, a series of figures representing the object of the invention in an illustrative rather than limitative manner has been attached.

### Brief description of the figures

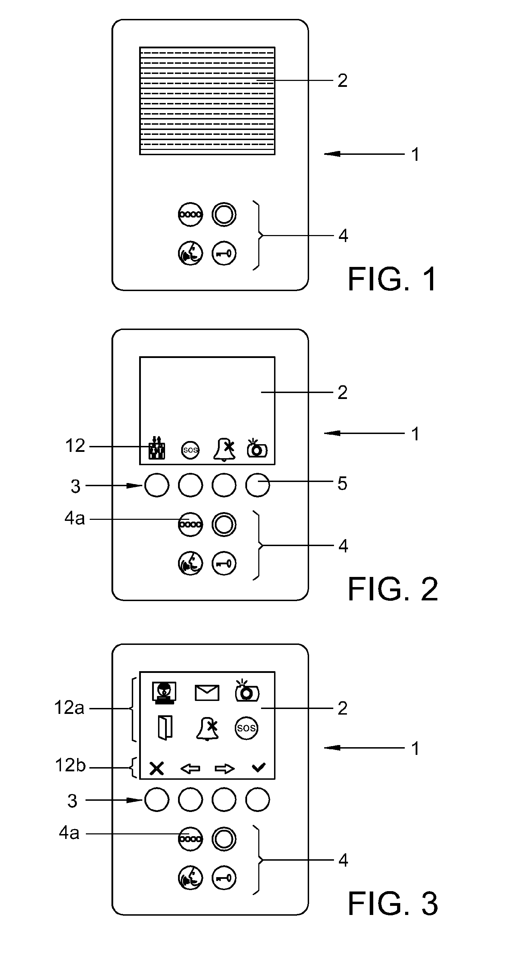

**Figure 1****.-** Shows a frontal view of an embodiment example of the device of the invention including four hidden first keys.
**Figure 2****.-** Shows a view equivalent to the previous one, but in this case, the first keys are made visible to allow the access to the functionalities allocated thereof by means of the icons represented on the screen arranged in front of each one of the first keys.
**Figure 3****.-** Shows an embodiment example wherein the first keys have been allocated navigation functions by an additional function menu.

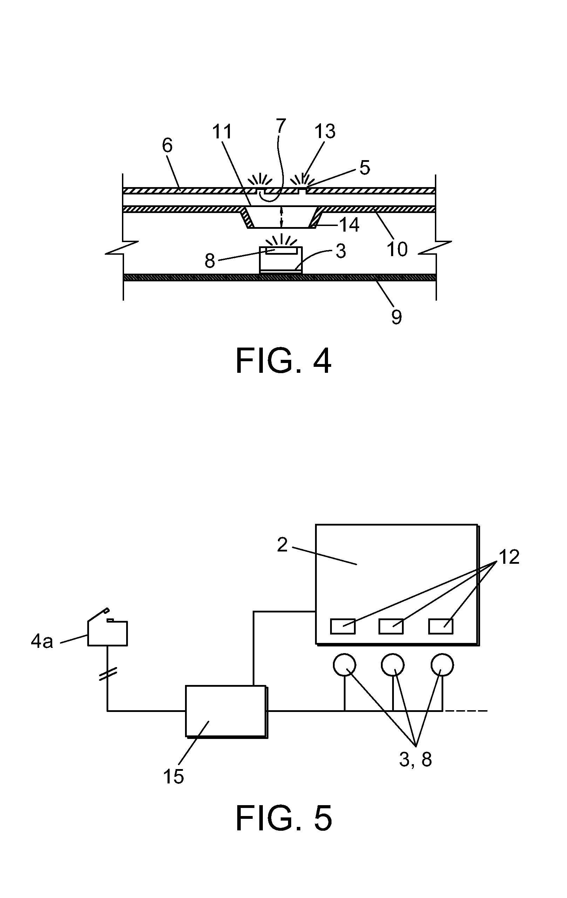

**Figure 4****.-** Shows a detail of a section of the configuration of the first keys hidden under the frontal plate of the casing of the device.
**Figure 5****.-** Shows a functional block diagram of the invention, wherein a control circuit is used to detect the actuation of a second key that constitutes the actuating means of the illuminating and enabling element of the first keys, so they are illuminated and made visible after the actuation of said second key.

### Description of the preferred embodiment

Next, a description of the invention will be made based on the aforementioned figures.

The invention relates to a keyboard of an electronic device 1 which is provided with a display screen 2 of functionalities configurable by means of interactive menus, where the keyboard comprises first keys 3 associated with a configurable secondary functionality, shown on the screen by means of icons 12, so when one of the first keys 3 is actuated, the functionality associated thereof according to the icon 12 represented on the screen is carried out. To achieve the foregoing, the first keys are located externally and on the periphery of the screen 2 in such a way that the icons 12 are represented in correspondence with each one of the first keys 3.

In addition, the keyboard is provided with second keys 4, each one of which is associated with a main function, so when a second key 4 is actuated, the main functionality associated with the corresponding second key being actuated is carried out.

The main novelty of the invention resides in the fact that each one of the first keys 3 is hidden within the device under a translucent area 5 of the frontal plate 6 of the casing of the device 1, in such a way that when the device 1 is idle, the first keys 3 are not visible by the user; only the second keys 4 carrying out main functions remain visible.

In the embodiment example, the device 1 is a video intercom system whose basic functions are a menu, connection with the camera, audio and door opening; which is why it comprises four second keys 4, one for each one of these functions. Obviously, the number of second keys may very depending on the needs required by the device 1.

The described configuration provides an appearance that is more attractive to the user, as well as great management simplicity and cleanliness in the design.

The frontal plate 6 comprises a recess 7 in its hidden rear face, which is arranged in correspondence with each first key 3, which defines the translucent area 5 of each first key 3. The recesses 3, in the embodiment example, present a circular configuration that defines the translucent area that must be acted upon to actuate each one of the first keys 3. The recess 7 may obviously adopt any configuration.

An illuminating element 8 is arranged on each first key 3, which in the embodiment example is constituted by a LED (light-emitting diode) diode. The first key 3 is a capacitive-type key and is mounted on the corresponding plate of the printed circuit 9. The second keys (4) are also capacitive-type keys, with which the actuation of the first and second keys is carried out by touching them.

There is a sheet 10 provided with holes 11 between the frontal plate 6 and the plate of the printed circuit 9, said holes 11 being located in correspondence with the translucent areas 5 of the frontal plate 6 and with each one of the first keys 3, so said first keys 3 are housed in the holes 11. In the embodiment example, the holes 11 are crossed by means of a lateral perimeter wall 14 that constitutes a protective element of the first key 3, the illuminating element 3 and the illuminating element 8, so when the circle defined by the translucent area 5 is touched, the first key 3, located under said translucent area 5, is actuated by virtue of its capacitive nature.

The invention envisages allocating to one of the second keys 4, such as, for example, the key 4a, an actuating function of the both illuminating and simultaneously enabling elements 8 of the first keys 3, so when the device 1 is idle, as commented above, the first keys 3 are hidden, and when the second key 4a is actuated, the illuminating elements 8 are turned on, which produce the illumination 13 of the translucent areas 5, thus illuminating the actuating area of the first keys 3 and enabling the first keys 3 simultaneously, while showing the icons 12 allocated to each one of the functionalities of each one of said first keys 3. This operationallows to produce the actuation of the corresponding first key 3 when the translucent area 5 is illuminated 13 if said translucent area 5 of the frontal plate 6 is touched, thus carrying out the functionality associated with said first key 3, which is shown by means of the icon 12 represented on the screen 2, carrying out said allocated functionality.

To achieve the foregoing, the second key 4a is connected to the illuminating elements 5 by means of a control circuit 15, which, together with the second key 4, constitute the means to activate the illuminating elements 8 and enable the first keys 3. It also activates the screen 2 simultaneously to show the icons 12 representing the functionality allocated to each one of the first keys 3. Each one of said functionalities may be configured by the installer of each project; consequently, the invention provides four semi-direct functions to extend the benefits of said projects where required.

The control circuit 15 is configured in such a way that when the key 4a is kept pressed during a pre-established period of time, for example three seconds, the actuation of the illuminating elements of the first keys and the enabling of said first keys takes place, while the additional function menu 12a, along with the navigation functions 12b allocated to the first keys 3, are shown on the screen to navigate said additional function menu 12a by actuating said first keys 3...

In addition, the invention relates to an actuation procedure of the keyboard of the aforementioned electronic device 1, which is **characterized in that** it comprises maintaining the first keys hidden under the frontal plate 6 of the casing when the device 1 is idle, a situation in which, when the second key 4a is actuated, which constitutes the actuating means of the illuminating and enabling element of the first keys 3, the illumination 13 of thefirst keys 3 is carried out in such a way that they are made visible and the image of the function associated thereof is shown on the screen. In this situation, when a first key 3 is actuated, the function associated thereof is carried out. This function varies depending on the context, that is to say, one function or another is shown depending on the state of the screen: idle, in conversation, with an image, etc.

The procedure of the invention also comprises maintaining the second key 4a, which activates the illuminating element 8 of the first keys 3 and enables said first keys 3, pressed during a pre-established period of time, in order to allocate navigation functions, shown by means of images 12b on the screen, to the first keys 3 and to show an additional function menu 12a on the screen simultaneously. In this situation, by actuating said illuminated first keys 3, said additional function menu 12a may be navigated according to the navigation functionality associated with each one of the first keys 3.

## Claims

1. Keyboard of an electronic device, wherein the electronic device comprises:
- a display screen (2) of functionalities configurable by means of interactive menus,
- at least one first key (3) associated with a configurable functionality representable on the screen (2), to actuate the at least first key (3) to carry out the functionality associated with said at least first key (3),
- second keys (4), each one of which is associated with a function, to carry out the function with which it is associated by actuating a second key (4),
**characterized in that**
- the at least first key (3) is hidden within the device (1), under a translucent area (5) of the frontal plate (6) of its casing,
- it comprises an illuminating element (8) located under the frontal plate and in correspondence with the at least first key (3),
- one of the second keys (4a) constitutes an actuating means of the illuminating (8) and enabling element of the at least first key (3) to illuminate and make visible the at least first key (3) and show on the screen (2) the function associated with said at least first key by actuating said second key (4), which actuation of said at least first key (3), by touching said illuminated translucent area (5) of the frontal plate (6), actuates the function associated with said at least first key (3).

2. Keyboard of an electronic device according to claim 1, **characterized in that** the frontal plate (6) comprises a recess (7) that defines the translucent area (5) in its hidden rear face.

3. Keyboard of an electronic device according to claim 2, **characterized in that** the recess (7) comprises a configuration selected among a closed and a semi-closed configuration.

4. Keyboard of an electronic device according to claim 3, **characterized in that** the recess (7) presents a circular configuration.

5. Keyboard of an electronic device according to claim 1, **characterized in that** the least first key (3) and second keys are capacitive.

6. Keyboard of an electronic device according to claim 1, **characterized in that** the illuminating element (8) is a light-emitting diode.

7. Keyboard of an electronic device according to claim 1, **characterized in that** the illuminating element (8) is mounted on the at least first key (3).

8. Keyboard of an electronic device according to claim 1, **characterized in that** functionality associated with said at least first key (3) is a secondary function and the function associated with the second keys (4) is a main function.

9. Keyboard of an electronic device according to any one of the claims 1 to 8, **characterized in that** it comprises a plurality of first keys (3), each one of which is arranged in correspondence with a translucent area (5) of the frontal plate (6) and with an illuminating element (8) to make said first keys (3) visible and show the image of the associated function on the screen (2) when said second key (4a) is actuated.

10. Keyboard of an electronic device according to claim 9, **characterized in that** it comprises means to show an additional function menu (1) on the screen (2) by detecting a touch maintained for a pre-established period of time of the second key (4a), which constitutes the actuating means of the illuminating elements (8) of the first keys (3), which enable said first keys (3).

11. Actuation procedure of the keyboard of an electronic device according to the device of claims 1 to 10, **characterized in that** it comprises:
- maintaining the at least first key or keys (3) hidden under the frontal plate (6) of the casing of the device (1) when the device (1) is idle,
- actuating the second key (4a), which constitutes the actuating means of the illuminating element (8) of the at least first key or keys (3), which enables the at least first key or keys (3), making at least the first key or keys (3) visible and showing the image of the function associated with said first key or keys (3) on the screen, where said function depends on the state of the screen (2).
- actuating a first key (3) to carry out the function associated with said first key (3).

12. Actuation procedure of a keyboard of an electronic device according to claim 11, **characterized in that** it comprises keeping the second key (4a), constituting the actuating means of the illuminating element (8) of the first keys (3) which enables said first keys (3), pressed for a pre-established period of time, to allocate the navigation functions, shown by means of images on the screen (2), to the first keys (3), and showing an additional function menu on the screen (2), also comprising actuating said illuminated first keys (3) to navigate said additional function menu.
